# EUROPEAN PATENT SPECIFICATION

(11) **EP 2 128 023 B1**
(45) Date of publication and mention of the grant of the patent: **23.05.2012**
(21) Application number: 08251869.7
(22) Date of filing: 29.05.2008
(51) Int. Cl.: B64D 13/06, F01D 9/06, F02C 6/08, F02C 7/14, F02K 3/06, B64D 29/00

(54) **A gas turbine engine with a bleed air cooler assembly**
Ein Gasturbinentriebwerk mit einer Kühleranordnung
Un moteur à turbine à gaz comprenant un ensemble refroidisseur

(43) Date of publication of application: 02.12.2009
(73) Proprietor: Pratt & Whitney Canada Corp., Longueuil, QC J4G 1A1 (CA)
(72) Inventor: Olver, Bryan W., Nobleton, Ontario L0G 1G0 (CA)
(74) Representative: Leckey, David Herbert

(56) References cited:
- EP-A- 0 469 825
- EP-A- 0 743 434
- EP-A- 0 743 435
- FR-A- 2 891 313
- US-A- 4 914 904
- US-A- 5 269 133

## Description

### TECHNICAL FIELD

The invention relates generally to a gas turbine engine and more particularly, to an improved bleed air cooler assembly for cooling compressed bleed air in a gas turbine engine.

Exemplary prior art bleed air cooler assemblies are disclosed in EP 0469825 A2, FR 2891313, EP 0743434 A1, EP 0743435 A1 and US 5269133. An oil cooler for a turbine engine is described in US 4914904.

### BACKGROUND OF THE ART

An aircraft gas turbine engine produces compressed air to be delivered to a combustor for combustion. Compressed air bled from the main source is delivered to various locations for other applications. For example, some aircraft require bleed air to be delivered to pressurize the aircraft cabin. In such a case, the bleed air, which has a relatively high temperature, must be cooled to a comfortable level for the passengers in the aircraft cabin. The compressed bleed air may be cooled outside of the gas turbine engine before it is introduced to the aircraft cabin. However, it is desirable to have such compressed bleed air cooled within the gas turbine engine.

Accordingly, there is a need to provide an improved bleed air cooling for a gas turbine engine.

### SUMMARY

In one aspect, there is provided an engine comprising a bleed air cooler assembly, as set forth in claim 1.

In a further aspect, there is provided a method for installing a bleed air cooler assembly in an annulus between an outer bypass duct and a gas generator case of a gas turbine engine, as set forth in claim 11.

Further details of these and other aspects will be apparent from the detailed description and figures included below.

### DESCRIPTION OF THE DRAWINGS

Reference is now made to the accompanying figures, in which:
Figure 1 is a schematic cross-sectional view of a turbofan gas turbine engine;
Figure 2A is a partial side elevational view of the gas turbine engine of Figure 1, showing an outer bypass duct of the engine;
Figure 2B is a rear elevational view of an outer bypass duct and gas generator case assembly viewed from a direction indicated by arrow 2B in Figure 2A, with the rotor and combustor of the engine removed, showing the bleed air cooler assembly and spacer positioned in first and second locations within an annulus defined between the outer bypass duct and the gas generator case, according to one embodiment;
Figure 2C is a plan view of Figure 2B, with the outer bypass duct removed and shown in broken lines ;
Figure 3 is a partial cross-sectional view of the engine, taken along line 3-3 of the outer bypass duct and the gas generator case assembly shown in Figure 2B, showing the internal configuration of the bleed air cooler assembly;
Figure 4 is a partial cross-sectional view of the engine, taken along line 4-4 of the outer bypass duct and gas generator case assembly shown in Figure 2B, showing the inner configuration of the spacer;
Figure 5 is a cross-sectional view of the bleed air cooler assembly taken along line 5-5 in Figure 3;
Figure 6 is a cross-sectional view of the bleed air cooler assembly taken along line 6-6 in Figure 3;
Figure 7 is a cross-sectional view of the bleed air cooler assembly taken along line 7-7 in Figure 3;
Figure 8 is an isometric view of the spacer shown in Figure 4, show in the profile of the spacer;
Figure 9 is an exploded isometric view of the bleed air cooler assembly of Figure 3, show in the lower profile of the assembly;
Figures 10 is a partial isometric view of the gas turbine engine, with a portion of the outer bypass duct cut away to show another embodiment;
Figure 11 is an exploded isometric view of the embodiment of Figure 10, with a portion of one wing of a cooler body cut and removed to show the internal configuration of the cooler body; and
Figure 12 is a partial isometric view of the embodiment of Figure 10, showing a radial cross-section of the embodiment.

### DETAILED DESCRIPTION OF THE PREFERRED EMBODIMENTS

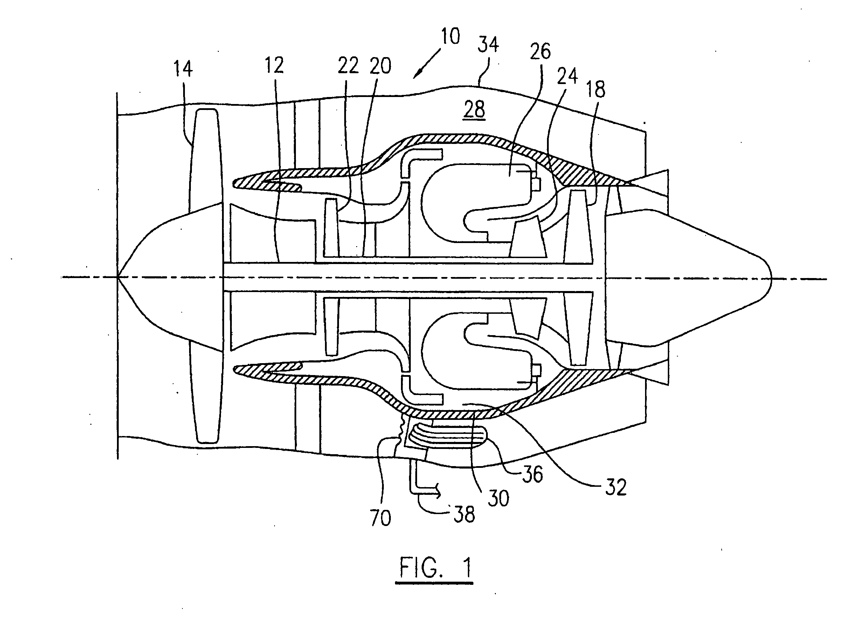

Figure 1 illustrates an example gas turbine engine 10 which includes an outer bypass duct 34, a gas generator case 30, a low pressure spool assembly seen generally at 12 which includes a fan assembly 14 and a low pressure turbine assembly 18, and a high pressure spool assembly seen generally at 20 which includes a high pressure compressor assembly 22 and a high pressure turbine assembly 24. The gas generator case 30 surrounds the low and high pressure spool assemblies 12 and 20 in order to define a main fluid path (not indicated) therethrough, including a combustor 26. The bypass duct 34 and the gas generator case 30 in combination define an annular bypass passage 28 for directing a bypass airflow therethrough. A plurality of aerodynamic fairings 70 cross the bypass passage 28, to allow services such as oil and bleed air to communicate with systems outside the engine, as will be discussed further below.

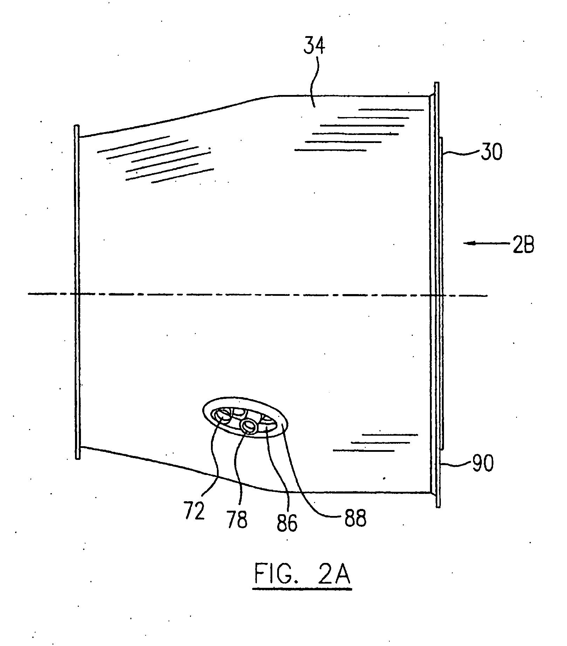

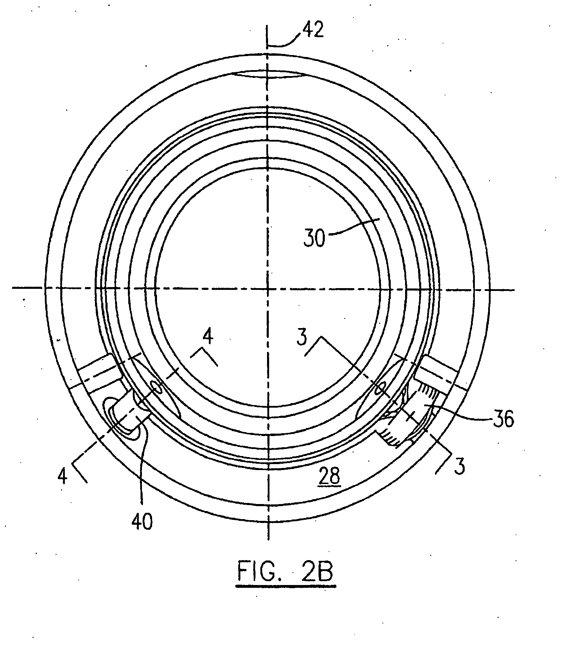

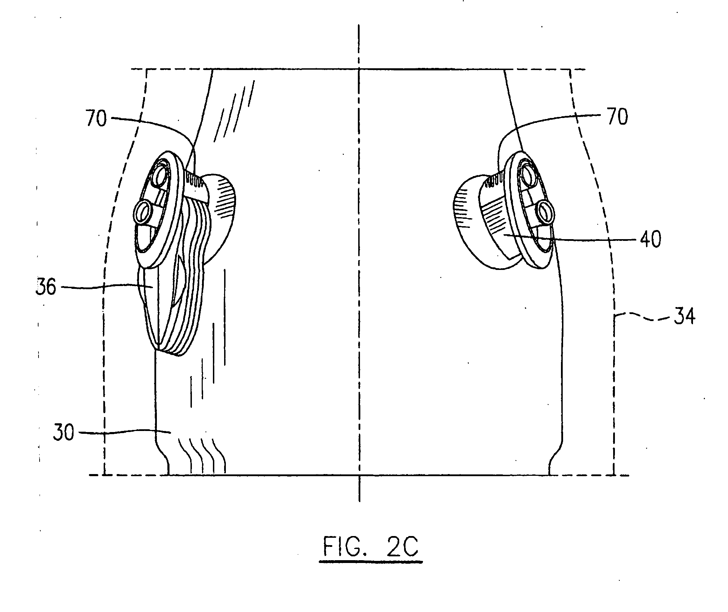

Reference is now made to Figures 1, 2A, 2B and 2C. The gas generator case 30 accommodates the combustor 26 and defines an annular compressed air plenum 32 surrounding the combustor 26 and for receiving compressed air from the high pressure compressor 22. The outer bypass duct 34 is positioned co-axially to the gas generator case 30 and therefore defines the annular bypass passage 28 therebetween. A bleed air cooler assembly 36 is installed within the annular bypass passage 28 in a first location to allow compressed bleed air from the compressed air plenum 32 to be cooled by the bypass airflow when the compressed bleed air flows through the bleed air cooler assembly 36 and to be then discharged into an external bleed air supply tube 38. The bleed air supply tube 38 leads to, for example, inside the cabin of an aircraft to which the engine is mounted. A spacer 40 is also positioned within the annular bypass passage 28 in a second location to allow compressed bleed air from the annular compressed air plenum 32 to be directed through the spacer 40 into another connected external bleed air supply tube similar to the bleed air supply tube 38, to, for example, other locations of the aircraft for a different purpose. The bleed air through the spacer 40 is not substantially cooled by the bypass flow and maintains relatively high temperatures. This high temperature bleed air can be used, for example, to melt ice on the aircraft parts exposed to cold weather.

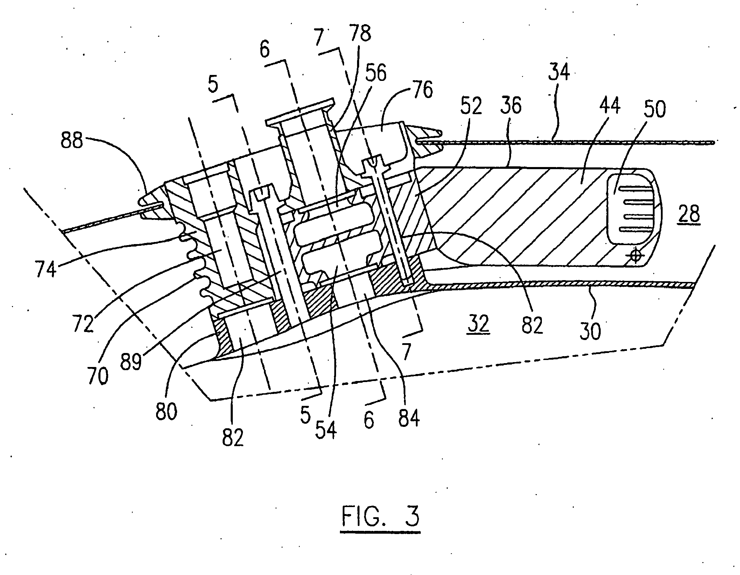

The bleed air cooler assembly 36 and the spacer 40 are positioned at respective right and left sides of the engine as shown in Figure 2B, and these positions may need to be exchanged, depending on a right hand engine mounting position or a left hand engine mounting position to the aircraft. Therefore, the bleed air cooler assembly 36 and the spacer 40 are interchangeable in positions of installation in the annular bypass passage 28 of the engine. It should be noted that the bleed air cooler assembly 36 can be axially positioned in any location within the annular bypass passage 28. In one embodiment of the present invention, the axial location of the bleed air cooler assembly 36 is on the top of the P3 air bleed boss on the gas generator case 30 (this will be further described hereinafter with reference to Figure 3), in order to avoid additional ducting.

In Figures 3, 5-7 and 9, the bleed air cooler assembly 36 according to one embodiment of the present invention includes a cooler body 44 defining a fluid passage within the cooler body 44. The fluid passage is represented by spaces 46, 48 and aperture 50. The cooler body 44 presents a low profile permitting to be positioned within the annular bypass passage 28 of the engine. The bleed air cooler assembly 36 further includes a connector 52 detachably affixed to the cooler body 44 and having an inlet 54 and an outlet 56 in fluid communication with the fluid passage of the cooler body 44. In this embodiment the cooler body 44 is formed as two halves 58, 60 of a shell defining the respective spaces 46 and 48 therein. The two halves 58 and 60 of the shell may be substantially identical and each define a mating surface at one end thereof in order to allow the two halves 58, 60 of the shell to mate together, thereby forming the cooler body 44. A portion at the respective halves 58, 60 of the shell is cut away to allow the connector 52 to be fittingly received between the two halves 58, 60 of the shell at the other end thereof.

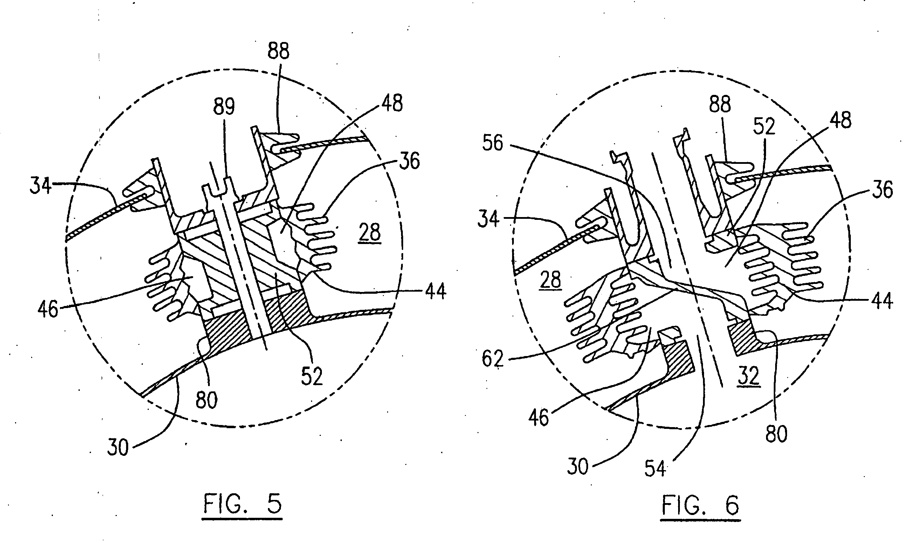

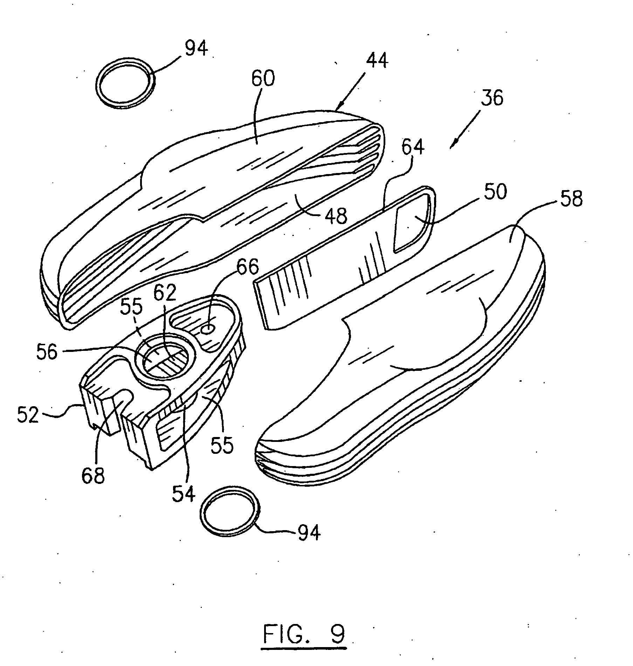

The inlet 54 and outlet 56 are defined in substantially parallel opposite surfaces (not indicated) of the connector 52 and are in fluid communication with apertures 55 defined in the respective opposite sides of the connector 52 (See Figure 9). Fluid communication between the inlet 54 and outlet 56 (or between the apertures 55 defined in the respective opposite sides of the connector 52) within the connector 52 is prevented by a partition 62 (see Figures 6 and 9). The inlet 54 and outlet 56 are in fluid communication with the respective spaces 46, 48 within the cooler body 44 through the respective apertures 55 defined in the opposite sides of the connector 52. A partition 64 is provided and supported between the opposite mating surface of the two halves 58, 60 of the shell. The partition 64 extends between the connector 52 and the end of the cooler body 54 remote from the end to which the connector 52 is affixed, and defines the aperture 50 at the remote end (as shown in Figures 3 and 9), to allow the space 46 and 48 within the respective two halves 58, 60 of the shell to be in fluid communication only through this remote end with respect to the connector 52. Therefore, bleed air can be introduced from inlet 54 to flow through space 46, aperture 50, space 48 and to then be discharged through outlet 56.

The two halves 58 and 60 of the shell provide a large contact area to both the hot bleed air flowing through the inside of the cooler body 44 and to the relatively cool bypass air flowing within the annular bypass passage 28 for heat exchange. For a better heat exchange result, a plurality of fins may be provided to the two halves 58, 60 of shell at both inside and outside thereof. The bleed air cooler assembly 36 may be fastened together by fasteners such as screws which are not shown. The connector 52 also defines a mounting hole 66 and a mounting recess 68 at a front end thereof for receiving fasteners to mount the bleed air cooler assembly 36 to the engine.

In addition to compressed bleed air passages needed to radially cross the annular bypass air passages 28 there are also oil passages to extend across the annular bypass air passage 28 to connect components of an oil system of the engine located outside of the housing or nacelle 10, such as oil pumps, oil reservoirs, etc. and internal components of the engine which need to be cooled and lubricated by oil such as bearing chambers, etc. In this embodiment, a fairing member 70 (see Figure 3) is provided to define an oil passage 72 extending therethrough. The fairing member 70 substantially has an L-shaped configuration in a side elevational view, including a radial portion 74 defining the oil passage 72 for receiving an oil supply and return transfer tube to be connected thereto, and an axial portion 76 extending from the radial portion 74. A bleed air supply tube connector 78 may be integrated with the axial portion 76, projecting radially out of the axial portion 76 for connection with, for example, the external bleed air supply tube 38 (see Figure 1). The fairing member 70, particularly the front and opposite sides of the radial portion 74, is configured in curvatures for aerodynamic fairing purposes in order to reduce flow resistance when the fairing member 70 is positioned within the annular bypass air passage 28.

Reference is made to Figures 2A, 2B, 2C, 3, 5-7 and 9. The gas generator case 30 includes a boss 80 at each of the first and second locations for installation of the respective bleed air cooler assembly 36 and spacer 40 (see Figure 2B). Two bores 82, 84 extend radially through each boss 80. Bore 82 which is located in a relatively front end of boss 80 is to be connected with an internal oil supply and return transfer tube (not shown). Bore 84 is in fluid communication with the compressed bleed air plenum 32 within the gas generator case 30 for introduction of compressed bleed air into the bleed air cooler assembly 36. Two relatively large apertures 86 (only one is shown in Figure 2A) are defined in the outer bypass duct 34 in the respective first and second locations, each substantially aligning with one boss 80 and thus with bores 82 and 84 defined in the boss 80. Each of the large apertures 86 may be provided with a grommet 88 for snugly retaining the axial portion 76 of the fairing member 70, thereby positioning the fairing member 70 such that the oil passage 72 of the fairing member 70 is aligned with the bore 82 in the boss 80 of the gas generator case 30. The fairing member 70 is further retained in position by a mounting screw 89 which extends through a mounting hole (not indicated) in the axial portion 76 and is loosely engaged with a threaded hole (not indicated) in boss 80 prior to installation of the bleed air cooler assembly 36 in position.

In installation of the bleed air cooler assembly 36, the bleed air cooler assembly 36 is inserted into the annular bypass air passage 28 from an open end 90 (see Figure 2A). The bleed air cooler assembly 36 is positioned within the annular bypass air passage 28 such that the connector 52 is inserted radially between the axial portion 76 of the fairing member 70 and the boss 80 of the gas generator case 30, to allow the inlet 54 and outlet 56 of the connector 52 to align with both bore 84 in the boss 80 and the bleed air supply tube connector 78 of the fairing member 70 and to also allow the mounting recess 68 (see Figure 9) in the front end of the connector 52 to receive the mounting screw 89 (mounting screw 89 has already been inserted through a mounting hole in the axial portion 76 of the fairing member 70 loosely engaged with threaded mounting hole in the boss 80 to secure the fairing member 70 in position prior to installation of the bleed air cooler assembly 36). At this stage, another mounting screw 92 is inserted through another mounting hole (not indicated) in the axial portion 76 of the fairing member 70, through mounting hole 66 of the connector (see Figure 9) and is engaged in a threaded mounting hole (not indicated) in the boss 80 of the gas generator case 30. Both mounting screws 89 and 90 are now tightened properly such that the opposite mounting faces of the connector 52 are tightly compressed between the axial portion 76 of the fairing member 70 and the boss 80 of the gas generator case 30 and the bleed cooler assembly 36 is therefore securely installed in the annular bypass air passage 28.

After installation of the bleed air cooler assembly 36 is completed, the radial portion 74 of the fairing member 70 is positioned immediately upstream of the connector 52 and the cooler body 44 extends downstream from the connector 52. Therefore, the fairing member 70 and the bleed air cooler assembly 36 in combination provide an aerodynamic fairing profile to reduce resistance to the bypass air flow.

Seal rings 94 as indicated in Figure 9, may be provided around the respective inlet 54 and outlet 56 on the substantially parallel opposite mounting surfaces of the connector 52, to prevent leakage of the compressed bleed air into the annular bypass air passage 28. A similar seal ring (not shown) may also be provided between the radial portion 74 of the fairing member 70 and the boss 80 of the gas generator case 30 to prevent oil leakage.

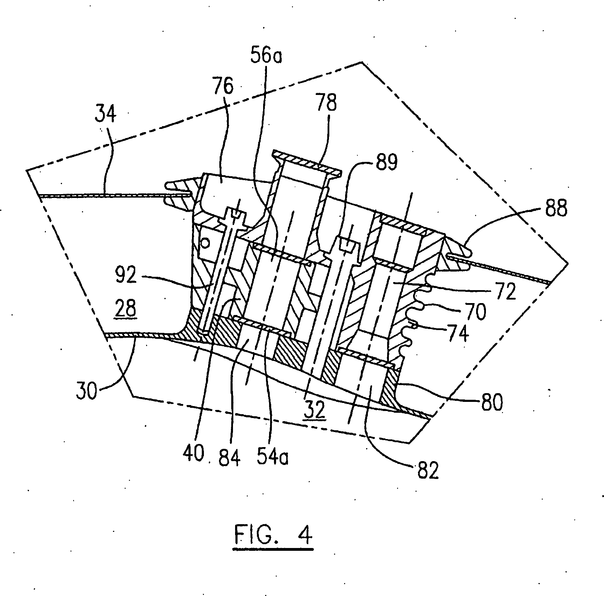

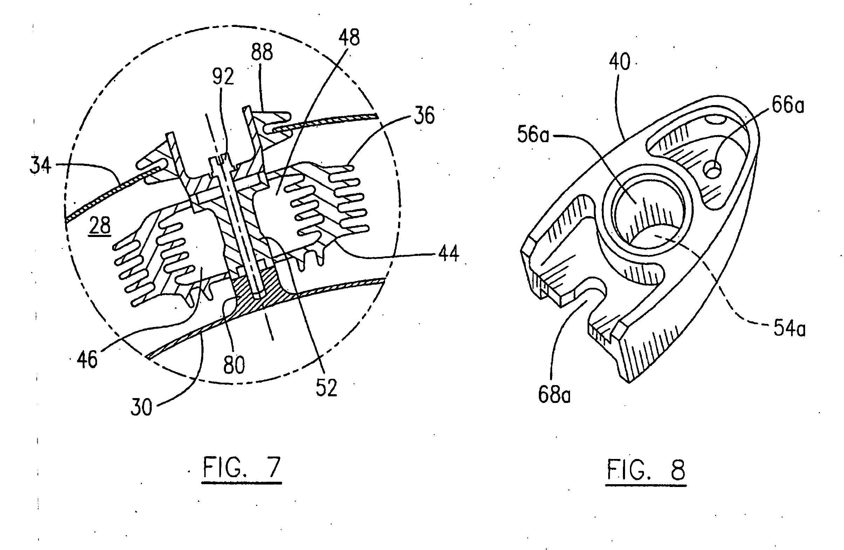

Now reference is made to Figures 4 and 8. The spacer 40 may have another profile similar to the outer profile of the connector 52 of Figure 9. The spacer 40 includes inlets 54a and 56a defined in the respective substantially parallel opposite mounting surfaces of the spacer which is similar to the inlets 54 and 56 of the connector 52 but does not define apertures in the opposite sides of the spacer 40, unlike the connector 52. The spacer 40 also does not include a partition similar to the angularly positioned partition 62 of the connector 52, as shown in Figure 6. Therefore the inlet 54a and outlet 56a of spacer 40 are in fluid communication through a hole (not indicated) extending radially through the spacer 40. The spacer 40 includes a mounting hole 66a and a mounting recess 68a similar to the mounting hole 66 and the mounting recess 68 in the connector 52 of Figure 9. Therefore, the spacer 40 may be installed in the annular bypass air passage 28 in a manner similar to that for installing the bleed air cooler assembly 36. When the spacer 40 is installed in position as shown in Figure 4, compressed bleed air from the compressed air plenum 32 within the gas generator case 30 is delivered through the inlet 84, through the hole extending through the spacer 40 and the outlet 56a into the bleed air supply tube connector 78 of the fairing member 70, and from there is directed by an external tube (not shown) to the components of the aircraft which, for example, require hot compressed air for anti-ice performance.

When the bleed air cooler assembly 36 or the spacer 40 needs to be removed from the engine, for example, for repair or maintenance, it can be easily done by loosening the mounting screw 89 and removing mounting screw 92 and then withdrawing the bleed air cooler assembly 36 or the spacer 40 without disturbing the oil line connection through the fairing member 70. The bleed air cooling assembly 36 or spacer 40 may also be placed back in the position (as previously described) without disturbing the oil line connection through the fairing member 70. Therefore, there is no need for an oil leakage check on the oil line connection through the fairing member 70 after either removing or installing the bleed air cooler assembly 36 or spacer 40. It is also allows interchange ability between the left- and right- installation positions of the bleed air cooler assembly 36 and spacer 40, depending on whether the engine is to be installed in a left- or a right-hand mounting position in a twin-engine aircraft. This option allows fewer-parts-count engine for use in twin-engine aircraft, by obviating the need to provide specific left- and right- configurations for the engine. Rather, a generic engine configuration may be provided, and the interchangeability of the cooler and spacer allow the assembler to determine whether a left- or right-hand engine will be provided during assembly, based on which parts are installed where.

It should be understood that the cooler body may be configured differently from the embodiments illustrated and described above, but a low profile configuration is preferably maintained in order to allow the assembly to be positioned within the annular bypass air passage of the engine and yet provides adequate cooling performance. In addition to means such as inner and outer fins for increasing heat exchanging surfaces, it is optional to have the cooler body and thus the entire bleed air cooler assembly smaller in a radial direction of the engine than other dimensions of the assembly in respect of the longitudinal and circumferential directions of the engine. For example, instead of having the cooler body extending downstream in the annular bypass air passage to increase the length of the internal fluid passage in the cooler body as described in the embodiment of the present invention, the cooler body may extend circumferentially within the annular bypass air passage of the engine in one or both circumferential directions. For example, one of such embodiments is further described below.

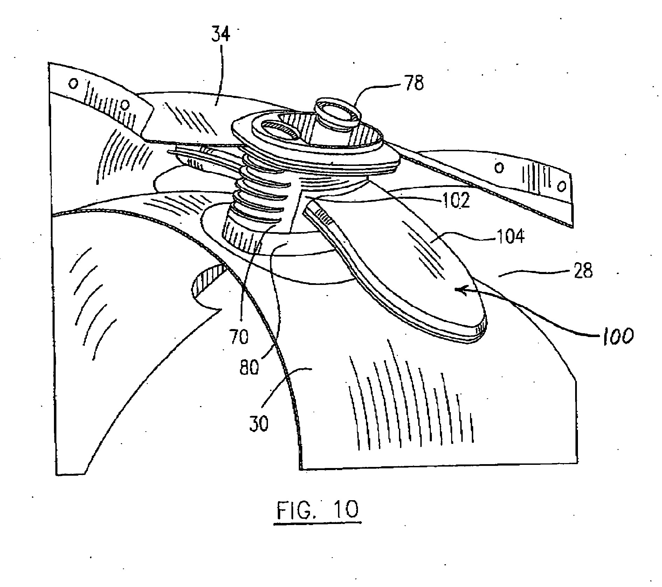

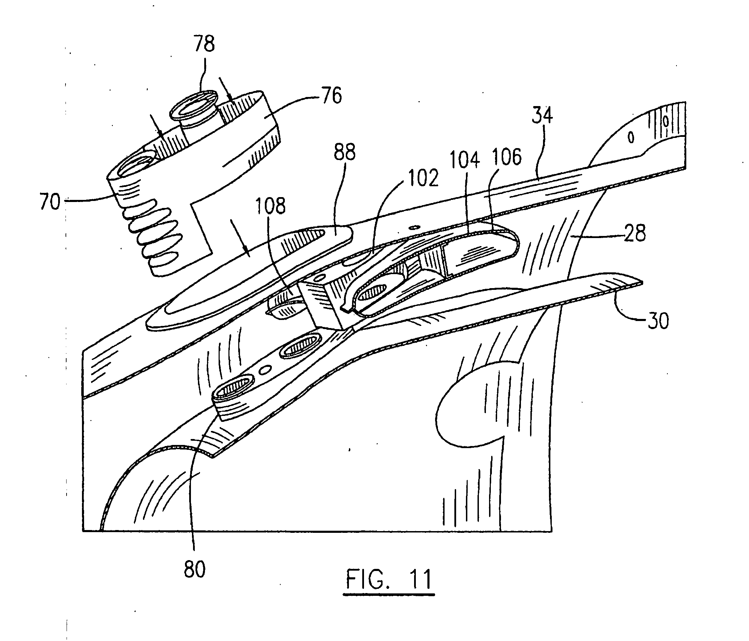

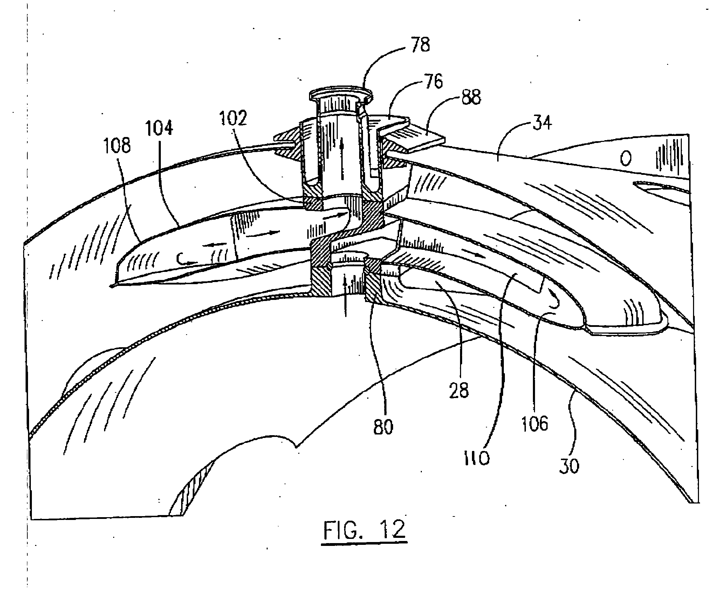

Referring to Figures 10-12, a bleed air cooler assembly 100, similar to the bleed air cooler assembly 36 of Figure 9, includes a connector 102 and a cooler body 104. The connector 102 has a profile generally similar to the profile of connector 52 of Figure 9 and the spacer 40 and therefore, the bleed air cooler assembly 100 may be interchangeable with either the bleed air cooler assembly 36 or spacer 40. The cooler body 104 includes two wings 106, 108 extending circumferentially oppositely form the connector 102 within the annular bypass air passage 28. Each of the wings 106, 108 is hollow and has a partition 110 to divide the inside of wing 106 (or 108) into first and second air passages (not indicated). The connector 102 has an inlet/outlet configuration similar to the connector 52 whereby the first air passages of the wings 106, 108 are in fluid communication with the respective inlet and outlet (not indicated) of the connector 102. The second air passages of the wings 106, 108, which are in fluid communication with the respective first air passages at the free end of the wings 106, 108, are connected directly to each other an din fluid communication. Therefore, bleed air can be introduced into the assembly 100 through the wings 106, 108 as shown by the arrows in Figure 12. The arrows in Figure 11 illustrate the way of installation. Other features are similar to the embodiment previously described and will not be repeated herein.

The above description is meant to be exemplary only, and one skilled in the art will recognize that changes may be made to the embodiments described without departure from the scope of the invention disclosed. For example, the cooler body and connector of the bleed air cooler assembly may be made from any suitable materials providing appropriate thermal conductivity and mechanical strength. Still other modifications which fall within the scope of the present invention will be apparent to those skilled in the art, in light of a review of this disclosure, and such modifications are intended to fall within the appended claims.

## Claims

1. A gas turbine engine (10) comprising:
an outer bypass duct (34) and a gas generator case (30) defining an annulus therebetween;
a bleed air cooler assembly (36) installed in the annulus, the assembly comprising:
a cooler body (44) defining a fluid passage positioned within the annulus; and
a connector (52) detachably affixed to the cooler body to form the bleed air cooler assembly, the connector having an inlet (54) and an outlet (56) in fluid communication with the fluid passage of the cooler body, the connector with the cooler body installed in one of first and second locations in the annulus, aligning with an aperture defined in the outer bypass duct, to allow the compressed bleed air from a compressed air plenum (32) within the gas generator case to be introduced through the inlet and to be cooled in the fluid passage of the cooler body and to then be discharged out of the outer bypass duct through the outlet; and
a spacer (40) defining a fluid passage having an inlet (54a) and an outlet (56a) and extending through the spacer, the spacer installed in the other of the first and second locations in the annulus, aligning with another aperture defined in the outer bypass duct to allow the compressed bleed air from the compressed air plenum within the gas generator case to flow through the fluid passage of the spacer out of the outer bypass duct;
**characterized in that** the bleed air cooler assembly and the spacer are adapted so as to be interchangeable between the first and second locations to accommodate right hand and left hand mounting positions of the engine on an aircraft.

2. The engine (10) as defined in claim 1 further comprising at least one fairing member (70) installed in the aperture defined in the outer bypass duct (34) in either the first or the second locations, the fairing member extending into the annulus upstream of the bleed air cooler assembly (36) or the spacer (40), the fairing member defining an oil passage (72) extending through the faring member to be connected with an oil system of the engine, for directing an oil flow radially through the annulus.

3. The engine (10) as defined in claim 2 wherein the fairing member (70) comprises a radial portion (74) defining the oil passage (72), an axial portion (76) extending from the radial portion for mating with an outer surface of the bleed air cooler assembly (36) or the spacer (40), and a bleed air supply tube (38) affixed in the axial portion of the fairing member adapted for aligning with the outlet (56, 56a) of the bleed air cooler assembly or the spacer.

4. The engine (10) as defined in any of claims 1 to 3 further comprising a partition (64) positioned within a cavity of the cooler body (44) to divide the cavity into two sections in fluid communication with each other, thereby forming the fluid passage defined in the cooler body.

5. The engine (10) as defined in claim 1 wherein the cooler body (44) comprises a partition (64) positioned within a cavity defined in the cooler body (44), the partition dividing the cavity into first and second sections, the first and second sections in fluid communication with each other and with the respective inlet (54) and outlet (56) to form the fluid passage of the cooler body.

6. The engine (10) as defined in claim 5 wherein the connector (52) is affixed to one end of the cooler body (44) and defines the outlet (56) and inlet (54) on opposite surfaces of the connector.

7. The engine (10) as defined in claim 6 wherein the first and second sections of the cavity are in fluid communication with each other at a distal end of the cooler body (44) with respect to the connector (52).

8. The engine (10) as defined in any of claims 5 to 7 wherein the bleed air cooler assembly (36) has a dimension in a radial direction of the engine which is smaller than dimensions of the assembly in respective longitudinal and circumferential directions of the engine.

9. The engine (10) as defined in any preceding claim wherein the cooler body (44) comprises two halves (58, 60) of a shell.

10. The engine (10) as defined in claim 5 wherein the cooler body (44) comprises a plurality of fin members extending both inwardly into the cavity and outwardly into the annulus.

11. A method for installing a bleed air cooler assembly (36) in an annulus between an outer bypass duct (34) and a gas generator case (30) of a gas turbine engine (10), comprising:
a) providing a bleed air cooler assembly (36) and a spacer (40);
b) inserting the bleed air cooler assembly into the annulus from an aft opening of the outer bypass duct, to align a connecting portion (52) of the assembly with an aperture defined in the outer bypass duct at one of first and second locations in the annulus, thereby allowing an outlet (56) of the assembly to be connected to an external tube out of the outer bypass duct and to allow an inlet (54) of the assembly to be connected to a compressed air plenum (32) within the gas generator case;
c) securing the connecting portion of the assembly to at least the gas generator case;
d) inserting the spacer into the annulus from the aft opening of the outer bypass duct, to align a fluid passage defined in the spacer with an aperture defined in the outer bypass duct at the other of the first and second locations within the annulus, thereby allowing an inlet (54a) of the fluid passage to be connected to the compressed air plenum and to allow an outlet (56a) of the fluid passage to be connected to another external tube out of the outer bypass duct;
e) securing the spacer to at least the gas generator case;
wherein the bleed air cooler assembly and the spacer are adapted so as to be interchangeable between the first and second locations to accommodate right hand and left hand mounting positions of the engine on an aircraft.

12. The method as defined in claim 11 wherein the connecting portion (52) of the assembly (36) is positioned in coordination with a fairing member (70) located within the aperture defined in the outer bypass duct (34), the fairing member defining an oil flow connection (72) extending radially through the annulus and defining an outlet extension with respect to the outlet (56) of the assembly.

13. The method as defined in claim 12 wherein the connecting portion (52) of the assembly (36) is positioned axially behind a radial portion (74) of the fairing member (70) and radially between a mounting surface of the gas generator case (30) and an axial portion (76) extending rearwardly from the radial portion of the fairing member, aligning the inlet (54) of the assembly with an aperture defined in the gas generator case and aligning the outlet (56) of the assembly with the outlet extension of the axial portion of the fairing member.

## Patentansprüche

1. Gasturbinenmaschine (10) umfassend:
eine äußere Bypassleitung (34) und eine Gaserzeugerummantelung (30),
die einen Ring dazwischen definiert;
eine Zapfluftkühler-Anordnung (36), die in dem Ring angeordnet ist, wobei die Anordnung umfasst:
einen Kühlerkörper (44), der einen Fluidweg definiert, der innerhalb des Rings angeordnet ist; und
einen Verbinder (52), der entfernbar an dem Kühlerkörper befestigt ist, um die Zapfluftkühler-Anordnung auszubilden, wobei der Verbinder einen Einlass (54) und einen Auslass (56) in Fluidverbindung mit dem Fluidweg des Kühlerkörpers aufweist, wobei der Verbinder mit dem an einem eines ersten und eines zweiten Ortes in dem Ring angebrachten Kühlerkörper mit einer Aussparung fluchtend angeordnet ist, die in der äußeren Bypassleitung definiert ist, um es der verdichteten Zapfluft von einem Plenum verdichteter Luft (32) innerhalb der Gaserzeugerummantelung zu erlauben, durch den Einlass eingeführt zu werden und in dem Fluidweg des Kühlerkörpers gekühlt zu werden und dann aus der äußeren Bypassleitung durch den Auslass abgelassen zu werden; und
einen Beabstander (40), der einen Fluidweg definiert, der einen Einlass (54a) und einen Auslass (56a) aufweist, und sich durch den Beabstander erstreckt, wobei der Beabstander, der an dem anderen des ersten und des zweiten Orts in dem Ring angeordnet ist, fluchtend mit einer anderen Aussparung ist, die in der äußeren Bypassleitung definiert ist, um es der verdichteten Zapfluft von dem Plenum verdichteter Luft innerhalb der Gaserzeugerummantelung zu erlauben, durch den Fluidweg des Beabstanders aus der äußeren Bypassleitung heraus zu strömen;
**dadurch gekennzeichnet, dass** die Zapfluftkühler-Anordnung und der Beabstander derart ausgebildet sind, dass sie zwischen dem ersten und dem zweiten Ort austauschbar sind, um eine rechte und eine linke Anbringungsposition der Maschine an einem Flugzeug bereitzustellen.

2. Maschine (10) nach Anspruch 1, des Weiteren umfassend zumindest ein Verkleidungselement (70), das in der Aussparung angeordnet ist, die in der äußeren Bypassleitung (34) an entweder dem ersten oder dem zweiten Ort definiert ist, wobei sich das Verkleidungselement in den Ring stromaufwärts der Zapfluftkühler-Anordnung (36) oder den Beabstander (40) erstreckt, wobei das Verkleidungselement einen Ölweg (72) definiert, der sich durch das Verkleidungselement erstreckt, um mit einem Ölsystem der Maschine verbunden zu werden zum Leiten eines Ölstroms radial durch den Ring.

3. Maschine (10) nach Anspruch 2, wobei das Verkleidungselement (70) einen radialen Bereich (74), der einen Ölweg (72) definiert, einen axialen Bereich (76), der sich von dem radialen Bereich erstreckt zum Zusammenwirken mit einer äußeren Fläche der Zapfluftkühler-Anordnung (36) oder dem Beabstander (40), und ein in dem axialen Bereich des Verkleidungselements befestigtes Zapfluftversorgungsrohr (38) umfasst, das zur fluchtenden Anordnung mit dem Auslass (56, 56a) der Zapfluftkühler-Anordnung oder dem Beabstander ausgebildet ist.

4. Maschine (10) nach einem der Ansprüche 1 bis 3, des Weiteren umfassend eine Trenneinrichtung (64), die innerhalb einer Aussparung des Kühlerkörpers (44) angeordnet ist, um die Aussparung in zwei Bereiche in Fluidverbindung miteinander zu teilen, wobei sie **dadurch** den Fluidweg, der in dem Kühlerkörper definiert ist, ausbildet.

5. Maschine (10) nach Anspruch 1, wobei der Kühlerkörper (44) eine Trenneinrichtung (64) umfasst, die innerhalb einer Aussparung angeordnet ist, die in dem Kühlerkörper (44) definiert ist, wobei die Trenneinrichtung die Aussparung in einen ersten und einen zweiten Bereich teilt, wobei der erste und der zweite Bereich in Fluidverbindung miteinander und mit dem jeweiligen Einlass (54) und dem jeweiligen Auslass (56) stehen, um den Fluidweg des Kühlerkörpers auszubilden.

6. Maschine (10) nach Anspruch 5, wobei der Verbinder (52) an einem Ende des Kühlerkörpers (44) befestigt ist und den Auslass (56) und den Einlass (54) an gegenüberliegenden Flächen des Verbinders definiert.

7. Maschine (10) nach Anspruch 6, wobei der erste und der zweite Bereich der Aussparung in Fluidverbindung miteinander stehen an einem bezogen auf den Verbinder (52) fernen Ende des Kühlerkörpers (44).

8. Maschine (10) nach einem der Ansprüche 5 bis 7, wobei die Zapfluftkühler-Anordnung (36) eine Abmessung in einer radialen Richtung der Maschine aufweist, die kleiner als Abmessungen der Anordnung in jeweilige längs und umfangsmäßige Richtungen der Maschine ist.

9. Maschine (10) nach einem der vorangehenden Ansprüche, wobei der Kühlerkörper (44) zwei Hälften (58, 60) eines Gehäuses umfasst.

10. Maschine (10) nach Anspruch 5, wobei der Kühlerkörper (44) eine Mehrzahl von Finnenelementen umfasst, die sich sowohl nach innen in die Aussparung als auch nach außen in den Ring erstrecken.

11. Verfahren zum Einbauen einer Zapfluftkühler-Anordnung (36) in einen Ring zwischen einer äußeren Bypassleitung (34) und einer Gaserzeugerummantelung (30) einer Gasturbinenmaschine (10) umfassend:
a) Bereitstellen einer Zapfluftkühler-Anordnung (36) und eines Beabstanders (40);
b) Einfügen der Zapfluftkühler-Anordnung in den Ring von einer hinteren Öffnung der äußeren Bypassleitung, um einen Verbindungsbereich (52) der Anordnung mit einer Aussparung, die in der äußeren Bypassleitung an einem eines ersten und eines zweiten Orts in dem Ring definiert ist, fluchtend anzuordnen, wodurch es einem Auslass (36) der Anordnung erlaubt wird, mit einem externen Rohr aus der äußeren Bypassleitung verbunden zu werden, und um es einem Einlass (54) der Anordnung zu erlauben, mit einem Plenum verdichteter Luft (32) innerhalb der Gaserzeugerummantelung verbunden zu werden;
c) Befestigen des Verbindungsbereichs der Anordnung an zumindest der Gaserzeugerummantelung;
d) Einführen des Beabstanders in den Ring von der hinteren Öffnung der äußeren Bypassleitung, um einen Fluidweg, der in dem Beabstander definiert ist, fluchtend mit einer Aussparung anzuordnen, die in der äußeren Bypassleitung an dem anderen des ersten und des zweiten Orts innerhalb des Rings definiert ist, wodurch es dem Einlass (54a) des Fluidweges erlaubt wird, mit dem Plenum verdichteter Luft verbunden zu werden, und um es einem Auslass (56a) des Fluidweges zu erlauben, mit einem anderen externen Rohr aus der äußeren Bypassleitung verbunden zu werden;
e) Befestigen des Beabstanders an zumindest der Gaserzeugerummantelung;
wobei die Zapfluftkühler-Anordnung und der Beabstander derart ausgebildet sind, dass sie zwischen dem ersten und dem zweiten Ort austauschbar sind, um eine rechte und eine linke Anbringungsposition der Maschine an einem Flugzeug bereitzustellen.

12. Verfahren nach Anspruch 11, wobei der Verbindungsbereich (52) der Anordnung (36) in Koordination mit einem Verkleidungselement (70) angeordnet ist, das innerhalb der Aussparung angeordnet ist, die in der äußeren Bypassleitung (34) definiert ist, wobei das Verkleidungselement eine Ölstromverbindung (72) definiert, die sich radial durch den Ring erstreckt und eine Auslasserweiterung bezogen auf den Auslass (56) der Anordnung definiert.

13. Verfahren nach Anspruch 12, wobei der Verbindungsbereich (52) der Anordnung (36) axial hinter einem radialen Bereich (74) des Verkleidungselements (70) und radial zwischen einer Anbringungsfläche der Gaserzeugerummantelung (30) und einem axialen Bereich (76) angeordnet ist, der sich nach hinten von dem radialen Bereich des Verkleidungselements erstreckt, wobei er den Einlass (54) der Anordnung fluchtend mit einer Aussparung anordnet, die in der Gaserzeugerummantelung definiert ist, und den Auslass (56) der Anordnung fluchtend mit der Auslasserweiterung des axialen Bereichs des Verkleidungselements anordnet.

## Revendications

1. Moteur à turbine à gaz (10) comprenant :
un conduit de dérivation externe (34) et un boîtier de générateur de gaz (30) définissant un anneau entre eux ;
un ensemble de refroidisseur d'air de purge (36) installé dans l'anneau, l'ensemble comprenant :
un corps de refroidisseur (44) définissant un passage de fluide positionné dans l'anneau ;
et
un connecteur (52) fixé de manière détachable au corps de refroidisseur pour former l'ensemble de refroidisseur d'air de purge, le connecteur ayant une entrée (54) et une sortie (56) en communication fluidique avec le passage fluidique du corps de refroidisseur, le connecteur avec le corps de refroidisseur étant installés dans l'un de premier et deuxième emplacements dans l'anneau,
s'alignant avec une ouverture définie dans le conduit de dérivation externe, pour permettre à l'air de purge comprimé provenant d'une chambre à air comprimé (32) dans le boîtier de générateur de gaz d'être introduit à travers l'entrée et d'être refroidi dans le passage fluidique du corps de refroidisseur et d'être ensuite déchargé hors du conduit de dérivation externe à travers la sortie ; et
un dispositif d'espacement (40) définissant un passage fluidique ayant une entrée (54a) et une sortie (56a) et s'étendant à travers le dispositif d'espacement, le dispositif d'espacement étant installé dans l'autre des premier et deuxième emplacements dans l'anneau, s'alignant avec une autre ouverture définie dans le conduit de dérivation externe pour permettre à l'air de purge comprimé provenant de la chambre à air comprimé dans le boîtier de générateur de gaz de s'écouler à travers le passage fluidique du dispositif d'espacement hors du conduit de dérivation externe ;
**caractérisé en ce que**
l'ensemble de refroidisseur d'air de purge et le dispositif d'espacement sont adaptés de manière à être interchangeables entre le premier et le deuxième emplacement pour autoriser des positions de montage à gauche et à droite du moteur sur un aéronef.

2. Moteur (10) selon la revendication 1, comprenant en outre au moins un organe de coiffe (70) installé dans l'ouverture définie dans le conduit de dérivation externe (34) dans soit le premier soit le deuxième emplacement, l'organe de coiffe s'étendant dans l'anneau en amont de l'ensemble de refroidisseur d'air de purge (36) ou du dispositif d'espacement (40), l'organe de coiffe définissant un passage d'huile (72) s'étendant à travers l'organe de coiffe, devant être connecté à un système d'huile du moteur, pour diriger un écoulement d'huile radialement à travers l'anneau.

3. Moteur (10) selon la revendication 2, dans lequel l'organe de coiffe (70) comprend une portion radiale (74) définissant le passage d'huile (72), une portion axiale (76) s'étendant depuis la portion radiale pour s'accoupler avec une surface externe de l'ensemble de refroidisseur d'air de purge (36) ou du dispositif d'espacement (40) et un tube d'alimentation d'air de purge (38) fixé dans la portion axiale de l'organe de coiffe, prévu pour s'aligner avec la sortie (56, 56a) de l'ensemble de refroidisseur d'air de purge ou du dispositif d'espacement.

4. Moteur (10) selon l'une quelconque des revendications 1 à 3, comprenant en outre une cloison (64) positionnée dans une cavité du corps de refroidisseur (44) pour diviser la cavité en deux sections en communication fluidique l'une avec l'autre, pour ainsi former le passage fluidique défini dans le corps de refroidisseur.

5. Moteur (10) selon la revendication 1, dans lequel le corps de refroidisseur (44) comprend une cloison (64) positionnée dans une cavité définie dans le corps de refroidisseur (44), la cloison divisant la cavité en première et deuxième sections, la première et la deuxième section étant en communication fluidique l'une avec l'autre et avec l'entrée (54) et la sortie (56) respectives pour former le passage fluidique du corps de refroidisseur.

6. Moteur (10) selon la revendication 5, dans lequel le connecteur (52) est fixé à une extrémité du corps de refroidisseur (44) et définit la sortie (56) et l'entrée (54) sur des surfaces opposées du connecteur.

7. Moteur (10) selon la revendication 6, dans lequel les première et deuxième sections de la cavité sont en communication fluidique l'une avec l'autre à une extrémité distale du corps de refroidisseur (44) par rapport au connecteur (52).

8. Moteur (10) selon l'une quelconque des revendications 5 à 7, dans lequel l'ensemble de refroidisseur d'air de purge (36) a une dimension dans la direction radiale du moteur qui est plus petite que les dimensions de l'ensemble dans les directions longitudinale et circonférentielle respectives du moteur.

9. Moteur (10) selon l'une quelconque des revendications précédentes, dans lequel le corps de refroidisseur (44) comprend deux moitiés (58, 60) d'une coque.

10. Moteur (10) selon la revendication 5, dans lequel le corps de refroidisseur (44) comprend une pluralité d'organes d'ailettes s'étendant à la fois vers l'intérieur dans la cavité et vers l'extérieur dans l'anneau.

11. Procédé pour installer un ensemble de refroidisseur d'air de purge (36) dans un anneau entre un conduit de dérivation externe (34) et un boîtier de générateur de gaz (30) d'un moteur à turbine à gaz (10), comprenant les étapes suivantes :
a) fournir un ensemble de refroidisseur d'air de purge (36) et un dispositif d'espacement (40) ;
b) insérer l'ensemble de refroidisseur d'air de purge dans l'anneau depuis une ouverture arrière du conduit de dérivation externe, pour aligner une portion de connexion (52) de l'ensemble avec une ouverture définie dans le conduit de dérivation externe au niveau de l'un des premier et deuxième emplacements dans l'anneau, pour ainsi permettre de connecter une sortie (56) de l'ensemble à un tube externe hors du conduit de dérivation externe et pour permettre de connecter une entrée (54) de l'ensemble à une chambre à air comprimé (32) dans le boîtier de générateur de gaz ;
c) fixer la portion de connexion de l'ensemble à au moins le boîtier de générateur de gaz ;
d) insérer le dispositif d'espacement dans l'anneau depuis l'ouverture arrière du conduit de dérivation externe, pour aligner un passage fluidique défini dans le dispositif d'espacement avec une ouverture définie dans le conduit de dérivation externe au niveau de l'autre des premier et deuxième emplacements dans l'anneau, pour ainsi permettre de connecter une entrée (54a) du passage fluidique à la chambre à air comprimé et pour permettre de connecter une sortie (56a) du passage fluidique à un autre tube externe hors du conduit de dérivation externe ;
e) fixer le dispositif d'espacement à au moins le boîtier de générateur de gaz ;
l'ensemble de refroidisseur d'air de purge et le dispositif d'espacement étant prévus de manière à être interchangeables entre les premier et deuxième emplacements pour autoriser des positions de montage à gauche et à droite du moteur sur un aéronef.

12. Procédé selon la revendication 11, dans lequel la portion de connexion (52) de l'ensemble (36) est positionnée de manière coordonnée à un organe de coiffe (70) situé dans l'ouverture définie dans le conduit de dérivation externe (34), l'organe de coiffe définissant une connexion d'écoulement d'huile (72) s'étendant radialement à travers l'anneau et définissant une extension de sortie par rapport à la sortie (56) de l'ensemble.

13. Procédé selon la revendication 12, dans lequel la portion de connexion (52) de l'ensemble (36) est positionnée axialement derrière une portion radiale (74) de l'organe de coiffe (70) et radialement entre une surface de montage du boîtier de générateur de gaz (30) et une portion axiale (76) s'étendant vers l'arrière depuis la portion radiale de l'organe de coiffe, alignant l'entrée (54) de l'ensemble avec une ouverture définie dans le boîtier de générateur de gaz et alignant la sortie (56) de l'ensemble avec l'extension de sortie de la portion axiale de l'organe de coiffe.
